(19) Europäisches Patentamt

European Patent Office

Office européen des brevets

(11) EP 0 819 923 A2

(12) **EUROPEAN PATENT APPLICATION**

(43) Date of publication:
21.01.1998 Bulletin 1998/04

(51) Int Cl.⁶: **G01J 3/28**

(21) Application number: 97305373.9

(22) Date of filing: 18.07.1997

(84) Designated Contracting States:
AT BE CH DE DK ES FI FR GB GR IE IT LI LU MC NL PT SE

(30) Priority: 20.07.1996 GB 9615292

(71) Applicant: BRITISH AEROSPACE PUBLIC LIMITED COMPANY
Farnborough, Hants. GU14 6YU (GB)

(72) Inventor: **Foote, Peter**
P.O. Box 5, Filton, Bristol, BS12 7QW (GB)

(74) Representative: **Rooney, Paul Blaise et al**
**British Aerospace plc,**
**Company Headquarters,**
**Corporate IPR Department,**
**Lancaster House,**
**P.O. Box 87,**
**Farnborough Aerospace Centre**
**Farnborough, Hants. GU14 6YU (GB)**

(54) **Apparatus and method for spectral analysis**

(57) An optical system (1,2) with unknown spectrum is illuminated by a light from a spectrally broad-band light source (3) containing a plurality of distinct known spectra. These spectra are sampled at distinct wavelengths to produce discrete spectra and the light output from the system (1,2) is detected by means (6) which spatially integrate the output to recover the unknown system spectrum from the known source spectrum.

# Fig.4.

## Description

This invention relates to apparatus and a method for spectral analysis of the light output of an optical system to recover the spectrum of the system.

Optical spectral analysis is conventionally employed for optical telecommunications and optical sensing, frequently making use of wavelength division multiplexing techniques. In telecommunications the communications channels may be encoded on light sources of different wavelengths which then collectively transmit their radiation down the same fibre. Spectral analysis is used at the receiving end to split the combined wavelengths back into individual channels. In the case of optical sensors where a change in a physical variable such as temperature, strain or pressure can change the spectral properties of a light transmission path such as an optical fibre, spectral analysis can be used to measure these changes and from them quantify the measured variable.

Whilst changes in optical amplitude or intensity are measurable with relatively simple devices such as photodetectors it is far more difficult to measure a change in optical spectrum. Spectral analysis usually is achieved by means such as the introduction of dispersive elements into the optical path to split the light beam into different spatial modes with the spatial characteristics depending on wavelength. Conventionally these modes are then sequentially scanned to produce the spectrum. Alternatively the light may be split in an unbalanced interferometer with variable optical path imbalance, and scanned to provide an interferometric pattern which is Fourier transformed to yield the required spectrum.

These conventional techniques require mechanically or electronically scanned electro-optic devices of high precision and stability with consequent high cost. Additionally it is becoming increasingly more complex and expensive to develop such devices in hardware which are able to approach in performance, digital data processing techniques which are increasing in availability and power year by year. There is thus a need for an improved method and apparatus for spectral analysis of the light output of an optical system which makes more use of digital data processing techniques currently available and less use of relatively complex and expensive electro-optic devices.

According to one aspect of the present invention there is provided apparatus for spectral analysis of the light output of an optical system to recover the spectrum of the system, characterised by including a spectrally broad-band light source for illuminating the system with a beam of light containing a plurality of distinct known spectra, means for sampling the spectra in the beam, before or after passage of the beam through the system, at a plurality of distinct wavelengths to produce discrete spectra, and means for detecting and spectrally integrating the light output from the system to recover the unknown discrete spectrum of the system from the known source spectrum.

Preferably the light source utilised is a light source which is modulated to produce the distinct spectra in the light beam.

Conveniently the light source is a Light Emitting Diode (LED).

Advantageously the apparatus includes means for varying the injection current to the diode to produce the distinct spectra.

Alternatively apparatus includes means for varying the temperature of the diode to produce the distinct spectra.

Preferably the means for sampling the spectra in the beam is located between the source and system, integral with or separate from the source.

Conveniently the means for sampling the spectra is a Fabry-Perot interferometer.

Alternatively the means for sampling the spectra includes a plurality of wavelength filters.

Advantageously the means for detecting and spectrally integrating the light output is a detector operable to measure and deconvolute the integrated power spectrum of the light output.

Preferably the light source output is substantially constant and the means for detecting and spectrally integrating the light output is a detector with a modulatable spectral responsivity.

Conveniently the detector is a semi-conductor, quantum well detector operable in response to a change of bias voltage to change spectral sensitivity to produce the required distinct spectra.

Advantageously the means for sampling the spectra in the beam is located between the output side of the system and the detector, integral with or separate from the detector.

Preferably the spectra sampling means is a Fabry-Perot interferometer.

According to a further aspect of the present invention, the foregoing apparatus is applied to an optical system in the form of a plurality of Bragg grating sensors.

According to yet another aspect of the present invention there is provided a method for spectrally analysing the light output of an optical system, operating in transmissive or reflective mode, to recover the spectrum of the system, characterised by including the steps of illuminating the system with a beam of light, containing a plurality of distinct known spectra, from a spectrally broad band light source, sampling the spectra in the beam at a plurality of distinct wavelengths to produce discrete spectra, before or after passage of the beam through the optical system, and detecting and spectrally integrating the output from the system to recover the unknown discrete spectrum of the system from the known source spectra.

Preferably the spectra are sampled in the beam at discrete wavelengths by a spectral comb filter.

Conveniently the output from the light source is modulated by varying the injection current or the source temperature to produce the discrete distinct spectra.

Advantageously the output from the light source is substantially constant and the responsivity of the means for detecting and spectrally integrating the light output from the system is modulated to produce the desired distinct spectra.

Alternatively the bias voltage to the detecting and integrating means is varied to change the spectral sensitivity of the means and thereby produce the desired distinct spectra.

For a better understanding of the present invention and to show how the same may be carried into effect, reference will now be made, by way of example, to the accompanying drawings, in which:

Figure 1 is a graphic plot of normalised light source output power against wavelength showing the various spectra recorded using different injection currents to the light source according to apparatus of the present invention and a method of the present invention,

Figure 2 is a graphical representation of wavelength versus normalised transmitted power produced using the apparatus of the present invention and showing a single spectra filtered according to the method of the present invention,

Figure 3 is a graphical representation of wavelength against normalised transmitted power for a numerically generated spectrum and recovered discrete spectrum utilised to test the method of the present application,

Figure 4 is a block diagram of apparatus for spectral analysis according to a first embodiment of the present invention,

Figure 5 is a block diagram of apparatus for spectral analysis according to a second embodiment of the present invention,

Figure 6 is a block diagram of apparatus for spectral analysis according to a third embodiment of the present invention shown in conjunction with an optical system in the form of an array of Bragg grating sensors,

Figure 7 is a graphic plot of wavelength against optical power showing the reflection spectrum from the Bragg grating array of Figure 6,

Figure 8 is a graphical plot of wavelength against optical power showing a single Bragg peak as produced by the apparatus of Figure 6, and

Figure 9 is a plot of wavelength against optical power similar to Figure 8 but showing the change of relative amplitude of components of the spectra due to Bragg peak shifts.

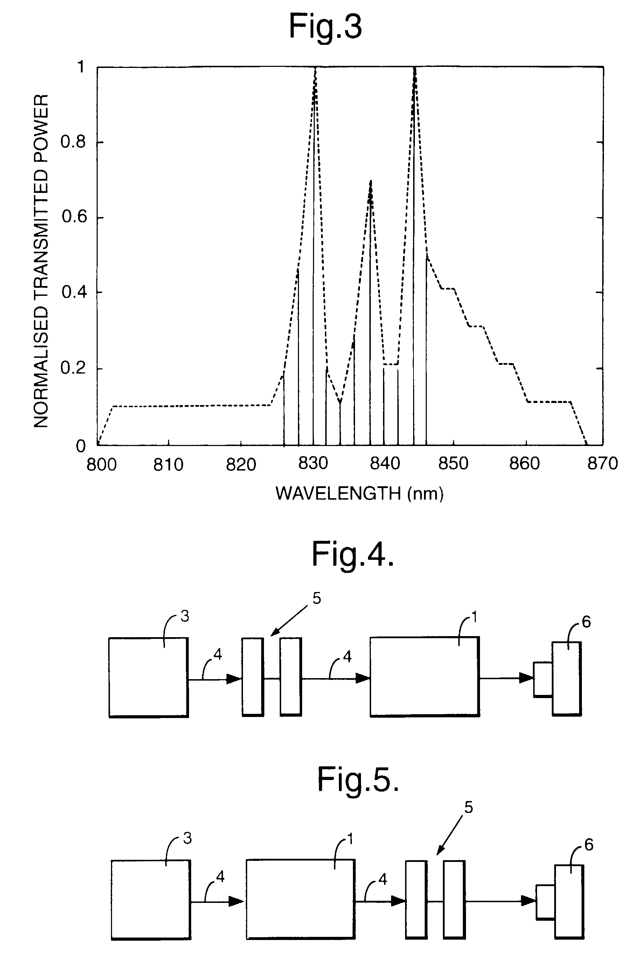

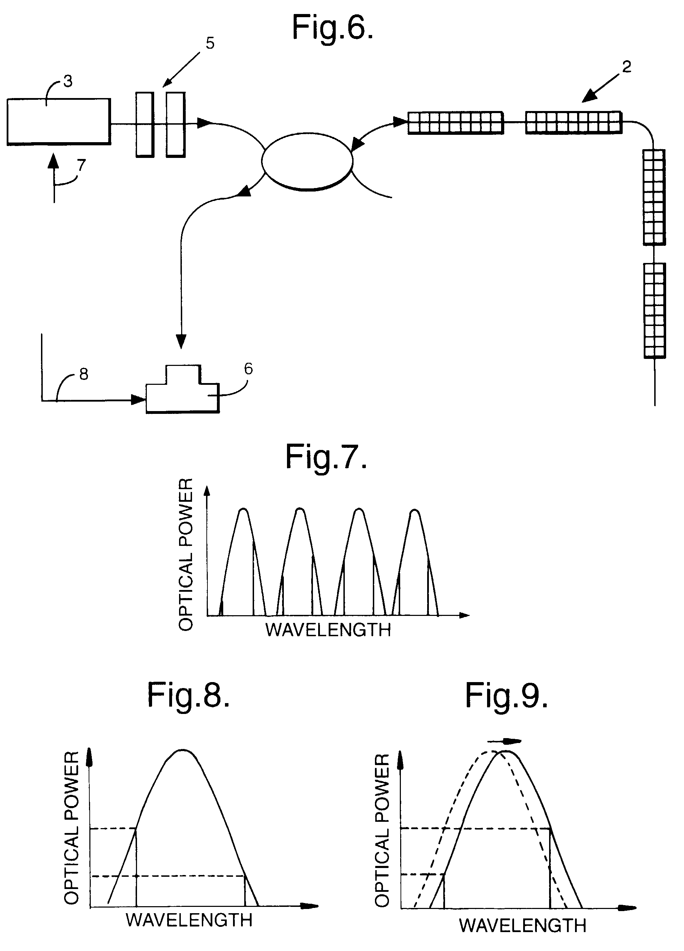

Apparatus of the present invention for spectral analysis of the light output of an optical system 1 such as the array of Bragg grating sensors 2 shown in Figure 6 of the accompanying drawings permits recovery of the spectrum of the system. The apparatus basically includes a spectrally broad-band light source 3 which is conveniently a Light Emitting Diode (LED) or a Super-Luminescent Diode (SLD). The source 3 is operable to illuminate the system 1 in any convenient manner such as by the free space optical systems shown in the embodiments of Figures 4, 5 and 6 or using guided wave or fibre optical light transmission systems. The source 3 provides a beam 4 of light containing a plurality of distinct known spectra.

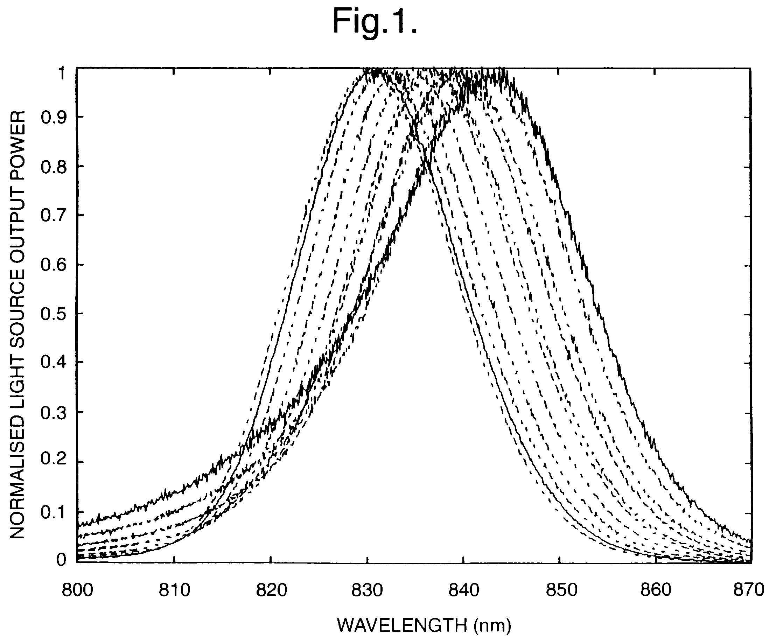

The apparatus also includes means 5 for sampling the spectra in the beam 4 either before passage of the beam through the system 1 or 2 as shown in the embodiments of Figures 4 and 6 or after passage of the beam 4 through the system 1 as shown in the embodiment of Figure 5. The sampling means 5 samples the spectra in the beam 4 at a plurality of distinct wavelengths to produce discrete spectra such as shown in Figure 1 of the accompanying drawings as will be later described in more detail. Also forming part of the apparatus according to the present invention is means 6 for detecting and spectrally integrating the light output from the system 1 to recover the unknown discrete spectrum of the system 1 from the known source spectrum.

The apparatus according to the present invention operates in theory as follows:

An optical light transmission or reflection system 1 can be characterised by the transmission (or reflection) function $T(\lambda)$. This system 1 is illuminated by the source 3 with a spectral profile $S(\lambda)$ and the transmitted (reflected) light detected in an integrating detector 6 of spectral sensitivity $D(\lambda)$.

The signal obtained from the detector 6 is I where:-

$$I = \int_{\lambda} D(\lambda) \ T(\lambda) \ S(\lambda) \ d\lambda \qquad (1)$$

The detector sensitivity and source profile can be combined into a single spectral response function $R(\lambda)$ with the integrand

$$R(\lambda)T(\lambda) \qquad\qquad (2)$$

Suppose the spectral response function comprises a discrete set of n 'points' in the spectral domain. The function T $(\lambda)$ is sampled at those points:

$$I = \sum_{n} R_n(\lambda_n)\, T_n(\lambda_n) \qquad\qquad \ldots\ldots \qquad (3)$$

Moreover, if $R(\lambda)$ varies, generating k distinct spectral response functions, $R_k$, then a set of k measurements are also generated with the integrating detector 6.

$$I_k = \sum_{k}\sum_{n} R_{k.n}(\lambda_n) T_n(\lambda_n) \qquad\qquad \ldots\ldots \qquad (4)$$

This is a vector-matrix multiplication which can be written in matrix form:

$$(I_1, I_2, \ldots I_k) = \begin{pmatrix} R_{11} & R_{12} & \ldots & R_{1n} \\ R_{21} & & \cdot & \cdot & \cdot \\ \cdot & & \cdot & \cdot & \cdot \\ \cdot & & \cdot & \cdot & \cdot \\ R_{k1} & & \cdot & \ldots & R_{kn} \end{pmatrix} \begin{pmatrix} T_1 \\ T_2 \\ \cdot \\ \cdot \\ T_n \end{pmatrix} \qquad \ldots\ldots \qquad (5)$$

or

$$I = RT \qquad\qquad (6)$$

This description of a discrete system indicates that, provided the matrix elements $R_{kn}$ (i.e. the coefficients of all the spectral response functions) are known then an unknown discrete spectrum $T_n(\lambda)$, can be recovered from a series of integrated detector measurements $I_k$, viz:

$$R^{-1} I = T \qquad\qquad (7)$$

where $T_n(\lambda_v)$ are the components of T and provided $R^{-1}$ exists.

Solving for the unknown, discrete spectrum $T_n(\lambda_v)$ is also equivalent to solving the set of simultaneous equations in (4), where the spectral components $T_n$ can be individually calculated provided k > n.

The set of simultaneous equations represented by the vector matrix equation

$$I = RT \qquad\qquad (8)$$

can be solved only if $R^{-1}$ exists. One condition, therefore, is that R is well conditioned. The individual spectra which generate the components of **R**, must be functionally independent; forming a set of **k** linearly independent equations. This, however, is the only constraint on the spectra. The exact form of the $R_k$ is unimportant provided they are independent of each other.

To test this a numerical simulation was performed based on typical optical device characteristics. For the calculations, a real set of spectra was recorded using a super-luminescent diode (SLD) with broad-band output as the source 3. Eleven spectra were recorded each using different injection currents to the SLD as shown in Figure 1.

In order to sample these spectra at discrete wavelengths, a spectral comb filter function, $f(\lambda)$, was generated numerically equivalent to the operation of the means 5. The form of this function was:

$$f(\lambda) = (1 + F\sin^2\delta)^{-1} \qquad (9)$$

where:

$$\delta = \frac{L}{\lambda_0}$$

and $\lambda_0$ is the free space wavelength of light; L and F are constants. This function is identical in form to the transmission characteristic of a Fabry-Perot interferometer with finesse, F.

For this exercise, $\delta$ was chosen to produce a free spectral range (wavelength spacing of maxima) of 2 nm with finesse, F, chosen as 100. These characteristics are easily achievable with actual optical devices.

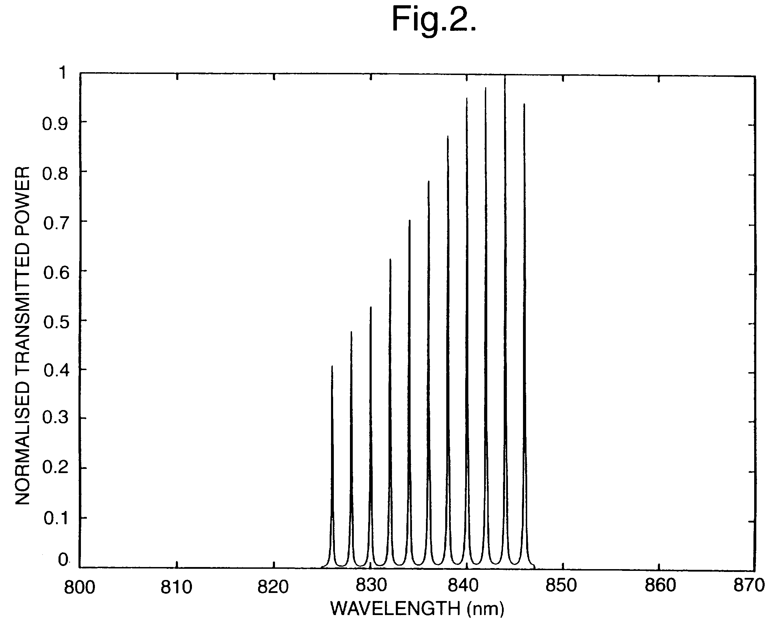

Shown in Figure 2 of the accompanying drawings is the effect of filtering numerically by a Fabry-Perot transmission function on one of the source spectra of Figure 1. This illustrates the discretizing effect of $f(\lambda)$. The spectra were also truncated to allow only eleven maxima (to match the number of different spectral response functions). These maxima occurred at the wavelengths displayed in the following Table I which shows the fictitious test spectrum and its reconstruction at specified, discrete wavelengths.

TABLE 1

| T($\lambda$) Relative power) | T($\lambda$) (Reconstructed) | Wavelength ($\lambda$, nm) |
| --- | --- | --- |
| 0.2 | 0.192292 | 826 |
| 0.5 | 0.479129 | 828 |
| 0.2 | 0.237952 | 832 |
| 0.1 | 0.105422 | 834 |
| 0.3 | 0.287894 | 836 |
| 0.7 | 0.676247 | 838 |
| 0.2 | 0.224344 | 840 |
| 0.3 | 0.202436 | 842 |
| 1.0 | 0.974157 | 844 |
| 0.5 | 0.512246 | 846 |

To assign values to the coefficients $R_{k,n}$ in equation 4 there are two possible approaches. Ideally, the amplitude of each spectrum at n discrete wavelengths should be measured. In a practical system, however, such a measurement will always entail an integrated power measurement over some finite spectral range. Also, the practical form of the filtering function $f(\lambda)$ only provides an approximation to the ideal comb function consisting of a series of delta functions. The contribution from a finite spectral region about each desired sampling wavelength will appear at the detector of the system. In this simulation, the values for $R_{k,n}$ were obtained by integrating the 11 regions of each filtered spectrum such as the one in Figure 2, around each maxima. The limits of each integration were from the minima either side of the peaks.

Having established the matrix, **R**, of spectral coefficients, a test of the spectral reconstruction technique was conducted. A continuous, fictitious transmission spectrum, T($\lambda$) was created, representing some unspecified optical system. The spectrum is displayed as the dotted curve in Figure 3. The amplitude of the fictitious spectrum at the wavelengths corresponding to the comb filter maxima are also listed in Table 1.

The product of each $R_k$ spectrum with T($\lambda$) and F ($\lambda$) was integrated between the wavelengths 826 and 846 nm to produce a set of 11 numerical values corresponding to 11 detector readings. If each detector reading is treated as a component, $I_k$, of row vector, I, then the operation just performed is nearly equivalent to setting up the vector matrix equation in equation 5.

To recover the discrete spectrum, $T_n(\lambda)$, equation 5 can be solved by finding the inverse of matrix **R** and multiplying vector I to recover $T_n(\lambda)$. Alternatively, by treating I = RT as a set of simultaneous equations, $T_n(\lambda)$ can be recovered using a row elimination technique. The latter approach was used and a set of values for $T_n$ was produced from equation 5 using the values in I, the coefficients $R_{k,n}$, and a Gaussian elimination algorithm for solving simultaneous equations. The results are tabulated in Table 1 together with the original values of the fictitious spectrum at the corresponding discrete wavelengths. The discrete, recovered spectrum is also plotted as a bar-plot in Figure 3 of the accompanying drawings which shows a numerically generated, fictitious spectrum, $T(\lambda)$, used to test the spectral recovery technique shown as a dashed curve. The discrete spectrum, recovered using the technique is shown as the bar-plot using solid, vertical lines.

The average deviation, at the discrete wavelengths, of the reconstructed and original transmission spectra was 5.4% with the largest deviation associated with the smallest numerical values of the $T_n$. This discrepancy would be expected to decrease as the comb filter function approached more closely, the idea array of delta functions. In practice, this could be achieved with Fabry-Perot filters of very high finesse.

The method of the present invention has shown that spectral features can successfully be picked out without the use of conventional spectral analysis techniques which all require scanning electro-optic devices. This technique can be used to super-resolve spectral features beyond the diffraction limited bounds of a conventional spectrum analyser provided a suitable, linearly independent set of coefficients for the matrix **R** can be generated.

The method of the present invention also will operate independently of the absolute light level in the system. If, for example, the matrix **R** was characterised and quantified for a series of spectra, provided the relative spectral power distributions in these spectra remained constant over the period of measurement (i.e. the time taken to generate the n detector readings necessary to reconstruct the spectrum), the overall light level could change without corrupting the measurement of relative spectra. This is a further, useful consequence of the linear algebraic basis employed in the method. Thus for example, the optical system could undergo a slowly changing, unquantified transmission loss due to say, degrading optical connectors, without requiring re-calibration of the spectral response matrix.

The example of the method of the invention as described used a relatively small matrix of spectral coefficients. A more general task of spectral analysis would require larger matrices. A spectral dynamic range of for example $10^4$ (not untypical of spectrum analysers) would require a 10,000x10,000 matrix. To solve for a spectrum using the Gaussian elimination technique would effectively require the inversion of a matrix this size every time a new spectrum was to be acquired. However, if the spectral response coefficients which make up the matrix were constant, the matrix R would require inversion only once. The process would then only require a matrix multiplication for each new spectrum.

The process of the present invention may better be exemplified by reference to embodiments of the apparatus of the invention illustrated in Figures 4, 5 and 6 of the accompanying drawings. In the first embodiment as illustrated diagramatically in Figure 4 the apparatus is intended to perform spectral analysis on the optical system 1 which has the unknown spectrum. The system 1 is illuminated from the broadband light source 3 such as a LED, via the sampling means 5 which is in the form of a filter located in the beam 4 between the source 3 and system 1. This filter 5 has the function of discretizing the spectrum from the source 3 and thereby presenting the optical system 1 with a series of spectral peaks at precisely known wavelengths and relative amplitudes. A suitable practical filter 5 is a Fabry-Perot interferometer which has two parallel reflective surfaces in close proximity. Alternatively the filter could be provided by a series of wavelength filters. As illustrated in Figure 4 the assembly according to this embodiment of the invention operates in a transmissive light mode but it could alternatively operate in a reflective mode by the insertion of a semi-reflective mirror (not shown) in the beam 4 between the sampling means or filter 5 and the system 1. The source 3 produces a number of distinct spectral profiles and for a Light Emitting Diode this is achievable by modulation. The modulation may be by varying the injection current of the diode or by modulating its temperature with a thermo-electric temperature controller. The different spectra so produced in the light source beam are similar to those shown in Figure 1. The source spectra discretise by the sampling means filter 5 are of the form illustrated in Figure 2.

Apparatus according to a further embodiment of the present invention is illustrated diagrammatically in Figure 5 where like items have been given the same reference numerals as in the Figure 4 embodiment and will not be further described in detail. In this embodiment the sampling means or filter 5 is placed on the output side of the system 1 between the system and the detecting means 6. The detecting means 6 is operable to detect and spectrally integrate the light output by measuring and deconvoluting the integrated power spectrum of the light output. However in this embodiment the light source 3 has a substantially constant output and the detecting means 6 is a detector with a modulatable spectral responsivity. Preferably this is achieved by providing a detector 6 which is a semi-conductor quantum well detector operable in response to a change of bias voltage to change spectral sensitivity to produce the required distinct spectra of the kind illustrated in Figure 2. Control of such a detector has the added advantage of being more reproducible than control of the light source 3 in the Figure 4 embodiment with which thermal dissipation can produce variation. Additionally the sampling means filter 5 could be integral with or separate from the detector 6 as illustrated. Moreover in the Figure 5 embodiment the sampling means 5 which again preferably is a Fabry-Perot interferometer may be placed in the source 3 for example in the form of an optical window or a series of optical coatings. This is applicable also to the Figure 4 embodiment where the sampling means filter 5 could likewise be separate from or integral with the source 3. Whilst the apparatus illustrated in Figure 5 is shown in transmissive mode it could also be modified to act in reflective mode.

Figure 6 of the accompanying drawings illustrates apparatus according to the Figure 4 embodiment as applied to an optical system in the form of Bragg grating sensors 2. Such sensors reflect very narrow spectral bands around a central wavelength determined by the physical grating constant that is the physical distance between the Bragg phase planes. When strained the gratings 2, which can be formed in optical fibres, change their grating spacing and hence their reflection wavelengths. By detecting these wavelength shifts the sensors can act as highly compact strain sensors. As illustrated in Figure 6 an array of such fibre gratings 2 is illuminated by a broad band light source 3 via the sampling means filter 5 which conveniently is a Fabry-Perot interferometer filter. The reflected spectra of the gratings 2 comprise a series of spectral peaks each independently shifting in response to local strain. Each grating sensor may occupy a spectral channel which delineates the wavelength shifting range of each sensor. As in the previous embodiments the light source 3 could be made modulatable conveniently by control of the injection current for generation of different spectra. Alternatively the source 3 may have a substantially constant light output and the detection means 6 given a modulatable spectral responsivity by bias voltage control to provide different spectral sensitivity. Source control is shown diagrammatically at 7 and the alternative detector control is shown diagrammatically at 8 in Figure 6.

With the Figure 6 embodiment the spectral reconstruction according to the method of the present invention can be used to measure independent wavelength shifts of each Bragg maxima by selecting the small end sampling wavelengths so that there are two for each sensor channel. For each pair of sampling wavelengths, the amplitude of the components recovered using the spectral reconstruction will vary as the wavelength of the sensor peak shifts. The value of the wavelength shift can be calculated by making a ratio-metric calculation between each pair of recovered values. Using a eleven spectra as exemplified previously up to five such grating sensors can be interrogated using a single light source 3 and a single detector 6.

Figure 7 shows the reflection spectrum of the Bragg grating array 2 with discrete spectra from source sample providing peaks at fixed intervals. As can be seen from Figures 8 and 9 as the Bragg peak shifts due to local strain of the respective Bragg grating 2, the relative amplitude of the spectra at sample points changes. Ratiometric measurement of these amplitudes allows the peak shift, and hence the strain to be determined.

## Claims

1. Apparatus for spectral analysis of the light output of an optical system (1) to recover the spectrum of the system, characterised by including a spectrally broad-band light source (3) for illuminating the system with a beam (4) of light containing a plurality of distinct known spectra, means (5) for sampling the spectra in the beam, before or after passage of the beam (4) through the system, at a plurality of distinct wavelengths to produce discrete spectra, and means (6) for detecting and spectrally integrating the light output from the system to recover the unknown discrete spectrum of the system from the known source spectrum.

2. Apparatus according to claim 1, wherein the light source (3) utilised is a light source which is modulated to produce the distinct spectra in the light beam (4).

3. Apparatus according to claim 2, wherein the light source (3) is a Light Emitting Diode (LED).

4. Apparatus according to claim 3, including means for varying the injection current to the diode to produce the distinct spectra.

5. Apparatus according to claim 3, including means for varying the temperature of the diode to produce the distinct spectra.

6. Apparatus according to anyone of claims 1 to 5, wherein the means for sampling the spectra in the beam (4) is located between the source (3) and system, integral with or separate from the source (3).

7. Apparatus according to claim 6, wherein the means (5) for sampling the spectra is a Fabry-Perot interferometer.

8. Apparatus according to claim 6, wherein the means (5) for sampling the spectra includes a plurality of wavelength filters.

9. Apparatus according to any one of claims 1 to 8, wherein the means (6) for detecting and spectrally integrating the light output is a detector operable to measure and deconvolute the integrated power spectrum of the light output.

10. Apparatus according to claim 1, wherein the light source output is substantially constant and wherein the means (6) for detecting and spectrally integrating the light output is a detector with a modulatable spectral responsivity.

11. Apparatus according to claim 10, wherein the detector is a semi-conductor, quantum well detector operable in response to a change of bias voltage to change spectral sensitivity to produce the required distinct spectra.

12. Apparatus according to claim 11, wherein the means (5) for sampling the spectra in the beam is located between the output side of the system and the detector, integral with or separate from the detector.

13. Apparatus according to claim 12, wherein the spectra sampling means (5) is a Fabry-Perot interferometer.

14. Apparatus according to any one of claims 1 to 13, applied to an optical system in the form of a plurality of Bragg grating sensors (2).

15. A method for spectrally analysing the light output of an optical system (1) operating in transmissive or reflective mode to recover the spectrum of the system, characterised by including the steps of illuminating the system with a beam (4) of light, containing a plurality of distinct known spectra, from a spectrally broad band light source (3), sampling the spectra in the beam at a plurality of distinct wavelengths to produce discrete spectra, before or after passage of the beam through the optical system (1), and detecting and spectrally integrating the output from the system to recover the unknown discrete spectrum of the system from the known source spectra.

16. A method according to claim 15, in which the spectra are sampled in the beam (4) at discrete wavelengths by a spectral comb filter.

17. A method according to claim 15 or claim 16, in which the output from the light source (3) is modulated by varying the injection current to the source or by varying the source temperature to produce the desired distinct spectra.

18. A method according to claim 15 or claim 16, in which the output from the light source (3) is substantially constant and in which the responsivity of the means (6) for detecting and spectrally integrating the light output from the system (1) is modulated to produce the desired distinct spectra.

19. A method according to claim 18, in which the bias voltage to the detecting and integrating means (6) is varied to change the spectral sensitivity of the means and thereby produce the desired distinct spectra.

# Fig.1.

NORMALISED LIGHT SOURCE OUTPUT POWER

WAVELENGTH (nm)

EP 0 819 923 A2

# Fig.2.

# Fig.3

# Fig.4.

# Fig.5.

# Fig.6.

# Fig.7.

OPTICAL POWER

WAVELENGTH

# Fig.8.

OPTICAL POWER

WAVELENGTH

# Fig.9.

OPTICAL POWER

WAVELENGTH